(19) Europäisches Patentamt
European Patent Office
Office européen des brevets

(11) **EP 2 044 391 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **07787725.6**

(22) Anmeldetag: **19.07.2007**

(51) Int Cl.:
*G01F 1/32* *(2006.01)*   *G01F 1/86* *(2006.01)*
*G01F 1/88* *(2006.01)*   *G01F 15/00* *(2006.01)*
*G01F 15/18* *(2006.01)*

(86) Internationale Anmeldenummer:
**PCT/EP2007/057467**

(87) Internationale Veröffentlichungsnummer:
**WO 2008/009719 (24.01.2008 Gazette 2008/04)**

(54) **MEßSYSTEM FÜR EIN IN EINER PROZEßLEITUNG STRÖMENDES MEDIUM**

MEASURING SYSTEM FOR A MEDIUM FLOWING IN A PROCESS LINE

SYSTÈME DE MESURE POUR UN MILIEU S'ÉCOULANT DANS UN CONDUIT DE TRAITEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.07.2006 DE 102006034296**
**06.10.2006 DE 102006047815**

(43) Veröffentlichungstag der Anmeldung:
**08.04.2009 Patentblatt 2009/15**

(73) Patentinhaber: **Endress + Hauser Flowtec AG**
**4153 Reinach (CH)**

(72) Erfinder: **HÖCKER, Rainer**
**79761 Waldshut (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
DE-A1- 4 013 351     DE-A1- 19 852 015
DE-A1- 19 957 437    US-A- 3 686 946
US-A1- 2002 043 103  US-A1- 2004 173 030

**Beschreibung**

Die Erfindung betrifft ein Meßsystem zum Messen wenigstens einer Meßgröße, insb. eines Massedurchflusses, einer Dichte, einer Viskosität, eines Drucks oder dergleichen, eines in einer Prozeßleitung strömenden Mediums mit einem Meßaufnehmer sowie einem zwischen diesem und der Prozeßleitung vermittelnden Strömungskonditionierer.

In der industriellen Prozeß-Meßtechnik werden, insb. auch im Zusammenhang mit der Automatisierung chemischer oder verfahrenstechnischer Prozesse, zur Erfassung von prozeßbeschreibenden Meßgrößen und zur Erzeugung von diese repräsentierenden Meßwertsignalen prozeßnah installierte Meßsysteme verwendet, die jeweils direkt an oder in einer von Medium durchströmten Prozeßleitung angebracht sind. Bei den jeweils zu erfassenden Meßgrößen kann es sich beispielsweise um einen Massendurchfluß, einen Volumendurchfluß, eine Strömungsgeschwindigkeit, eine Dichte, eine Viskosität oder eine Temperatur oder dergleichen, eines flüssigen, pulver-, dampf- oder gasförmigen Prozeß-Mediums handeln, das in einer solchen, beispielsweise als Rohrleitung ausgebildeten, Prozeßleitung geführt bzw. vorgehalten wird.

Bei den Meßsystemen handelt es sich u.a. um solche, bei denen In-Line-Meßgeräte mit magnetisch-induktiven Meßaufnehmern oder die Laufzeit von in Strömungsrichtung ausgesendeten Ultraschallwellen auswertende, insb. auch nach dem Doppler-Prinzip arbeitende, Meßaufnehmern, mit Meßaufnehmern vom Vibrationstyp, insb. Coriolis-Massedurchflußaufnehmer, Dichteaufnehmer, oder dergleichen verwendet werden. Der prinzipielle Aufbau und die Funktionsweise von magnetisch-induktiven Meßaufnehmer ist z.B. in der EP-A 1 039 269, US-A 60 31 740, US-A 55 40 103, US-A 53 51 554, US-A 45 63 904 oder solcher Ultraschall-Meßaufnehmer z.B. in der US-B 63 97 683, der US-B 63 30 831, der US-B 62 93 156, der US-B 61 89 389, der US-A 55 31 124, der US-A 54 63 905, der US-A 51 31 279, der US-A 47 87 252 hinlänglich beschrieben und überdies dem Fachmann ebenfalls hinreichend bekannt sind, kann an dieser Stelle auf eine detailliertere Erläuterung dieser Meßprinzipien verzichtet werden. Weiterführende Beispiele für derartige, dem Fachmann an und für sich bekannte, insb. mittels kompakter In-line-Meßgeräte gebildet, Meßsysteme sind zudem u.a. in der EP-A 984 248, GB-A 21 42 725, US-A 43 08 754, US-A 44 20 983, US-A 44 68 971, US-A 45 24 610, US-A 47 16 770,

US-A 47 68 384, US-A 50 52 229, US-A 50 52 230, US-A 51 31 279, US-A 52 31 884, US-A 53 59 881, US-A 54 58 005, US-A 54 69 748, US-A 56 87 100, US-A 57 96 011, US-A 58 08 209, US-A 60 03 384, US-A 60 53 054, US-A 60 06 609, US-B 63 52 000, US-B 63 97 683, US-B 65 13 393, US-B 66 44 132, US-B 66 51 513, US-B 68 80 410, US-B 69 10 387, US-A 2005/0092101, WO-A 88/02 476, WO-A 88/02 853, WO-A 95/16 897, WO-A 00/36 379, WO-A 00/14 485, WO-A 01/02816 oder WO-A 02/086 426 detailliert beschrieben.

Zum Erfassen der jeweiligen Meßgrößen weisen Meßsysteme der in Rede stehenden Art jeweils einen entsprechenden Meßaufnehmer auf, der in den Verlauf einer Medium führenden Prozeßleitung eingesetzt ist und der dazu dient, wenigstens ein die primär erfaßte Meßgröße möglichst genau repräsentierendes, insb. elektrisches, Meßsignal zu erzeugen. Dafür ist der Meßaufnehmer üblicherweise mit einem in den Verlauf der jeweiligen Prozeßleitung, dem Führen von strömendem Medium dienenden Meßrohr sowie eine entsprechende physikalisch-elektrische Sensoranordnung ausgestattet. Diese wiederum weist wenigstens ein primär auf die zu erfassende Meßgröße oder auch Änderungen derselben reagierenden Sensorelement auf, mittels dem im Betrieb wenigstens ein von der Meßgröße entsprechend beeinflußtes Meßsignal erzeugt wird. Zur Weiterverarbeitung oder Auswertung des wenigstens einen Meßsignals ist der Meßaufnehmer ferner mit einer dafür entsprechend geeigneten Meßelektronik verbunden. Die mit dem Meßaufnehmer in geeigneter Weise kommunizierende Meßelektronik erzeugt im betrieb des Meßsystems unter Verwendung des wenigstens einen Meßsignals zumindest zeitweise wenigstens einen die Meßgröße momentan repräsentierenden Meßwert, beispielsweise also einen Massendurchfluß-Meßwert, Volumendurchfluß-Meßwert, einen Dichte-Meßwert, einen Viskositäts-Meßwert, einen Druck-Meßwert, einen Temperatur-Meßwert oder dergleichen.

Zur Aufnahme der Meßelektronik umfassen solche Meßsysteme ferner ein entsprechendes Elektronik-Gehäuse, das, wie z.B. in der US-A 63 97 683 oder der WO-A 00/36 379 vorgeschlagen, vom Meßaufnehmer entfernt angeordnet und mit diesem nur über eine flexible Leitung verbunden sein kann: Alewtrantiv dazu kann das Elektronik-Gehäuse aber auch, wie z.B. auch in der EP-A 903 651 oder der EP-A 1 008 836 gezeigt, unter Bildung eines kompakten In-Line-Meßgeräts - beispielsweise eines Coriolis-Massedurchfluß-/Dichte-Meßgeräts, eines Ultraschall-Durchflußmeßgeräts, eines Vortex-Durchflußmeßgeräts, eines thermischen Durchfußmeßgeräts, eines Magnetisch-induktiven Durchflußmeßgerät oder dergleichen - direkt am Meßaufnehmer oder einem den Meßaufnehmer separat einhausenden Meßaufnehmer-Gehäuse angeordnet sein. In letzterem Fall dient das Elektronik-Gehäuse, wie beispielsweise in der EP-A 984 248, der US-A 47 16 770 oder der US-A 63 52 000 gezeigt, oftmals auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Meßsysteme der beschriebenen Art sind darüber hinaus üblicherweise über ein an die Meßelektronik angeschlossenes Datenübertragungs-System miteinander und/oder mit entsprechenden Prozeß-Leitrechnern verbunden, wohin sie die Meßwertsignale z.B. via (4 mA bis 20 mA)-Stromschleife und/oder via digitalen Daten-Bus senden. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßwertsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden.

Wie u.a. auch in der GB-A 21 42 725, US-A 58 08 209, US-A 2005/0092101, US-B 68 80 410, US-B 66 44 132, US-A 60 53 054, US-B 66 44 132, US-A 50 52 229 oder der US-B 65 13 393 diskutiert, können In-Line-Meßgeräte und insoweit auch Meßsystem der beschriebenen Art durchaus eine von der Art der Strömung mehr oder minder abhängige Meßgenauigkeit aufweisen. Von besonderem Interesse ist in diesem Zusammenhang auch eine momentane Ausprägung eines im Meßrohr wirksamen Strömungsprofils. In Anbetracht dessen, daß turbulente Strömungen, also Strömungen mit einer Reynoldszahl von größer 2300, über einen weiten Reynoldszahlbereich hinweg zueinander weitgehend ähnlich sind und insoweit auch einen vergleichbaren Einfluß auf die Meßgenauigkeit haben, wird bei vielen Meßsystemen oftmals eine hohe Strömungsgeschwindigkeit für das zu messende Medium angestrebt. Vortex-Durchflußmeßgeräte sind zur Erzielung einer ausreichend hohen Meßgenauigkeit zumeist sogar auf solche Strömungen angewiesen, die eine Reynoldszahl von weit über 4000 aufweisen.

Daher ist es bei Meßsystemen der in Rede stehenden Art durchaus üblich, zumindest bei Prozeßleitungen mit einem vergleichsweise großen Kaliber und/oder in Anwendungen mit vergleichsweise langsam strömenden Medien, das Meßrohr gegebenenfalls so auszubilden, daß es einen kleineren Strömungsquerschnitt aufweist, als ein einlaßseitig an das Meßsystem angeschlossenes Zulaufsegment der Prozeßleitung. Infolge dessen erfährt das strömende Medium dann eine Beschleunigung in Strömungsrichtung, wodurch wiederum auch eine Erhöhung der Reynoldszahl erzielt werden kann. Die Realisierung dieses Prinzips hat sich im besonderen auch bei solchen Meßsystemen bewährt, die mittels eines Ultraschall-Meßgeräts und/oder mittels eines Vortex-Durchflußmeßgeräts arbeiten und/oder die für die Messung von zumindest anteilig, insb. überwiegend oder vollständig, gasförmigen Medien vorgesehen sind.

Im Hinblick auch darauf, daß beispielsweise der das Meßprinzip von Vortex-Durchflußmeßgeräten begründende Zusammenhang zwischen einer Ablöserate von Wirbeln an einem der Strömung entgegenstehenden Staukörper und der damit primär zu erfassenden Meßgröße Volumendurchfluß oder Strömungsgeschwindigkeit erst oberhalb einer Reynoldszahl von 20000 in ausreichendem Maße als linear angesehen werden kann, ist gegebenenfalls ein vergleichsweise großer Unterschied zwischen den Strömungsquerschnitten von der Prozeßleitung und Meßrohr zu realisieren. Anders gesagt, kann für diesen Reynoldszahlbereich die den vorgenannten Zusammenhang entsprechend repräsentierende Strouhalzahl als weitgehend konstant angenommen werden.

Um über eine möglichst kurze Wegstrecke einen möglichst definierten Übergangsbereich vom Zulaufsegment hin zum Meßrohr mit kleinerem Strömungsquerschnitt zu schaffen ist es, wie u.a. auch in der GB-A 21 42 725, der US-A 58 08 209 oder US-A 2005/0092101 vorgeschlagen, üblich im Meßsystem einen entsprechenden Strömungskonditionierer mit einem sich zum Meßrohr hin verjüngenden, im Betrieb vom Medium durchströmten Lumen vorzusehen, der einlaßseitig des Meßrohrs angeordnet ist und somit zwischen diesem und dem Zulaufsegment der Prozeßleitung vermittelnd wirkt. Ein dem Zulaufsegment der Prozeßleitung zugewandtes Einlaßende des Strömungskonditionierers weist dabei einen Strömungsquerschnitt auf, der größer als der Strömungsquerschnitt des Meßrohrs ist, während ein dem Meßrohr zugewandtes Auslaßende des Strömungskonditionierers dementsprechend einen Strömungsquerschnitt aufweist, der kleiner als der Strömungsquerschnitt des Einlaßendes ist.

Besonders in der US-A 58 08 209 wie auch in der US-A 2005/0092101 wird im Zusammenhang mit den jeweils vorgeschlagenen Strömungskonditionierern ferner darauf hingewiesen, daß der damit realisierte Übergang zwischen den beiden verschieden großen Strömungsquerschnitten stetig und von Störstellen, wie beispielsweise Wirbel verursachende Kanten, absolut frei gehalten sein muß.

Dies kann durch vergleichsweise aufwenige Bearbeitung der Oberflächen des Strömungskonditioners wie auch der allfällig im Einlaufbereich des Meßsystems vorhanden Fügestellen durchaus in zufrieden stellendem Maße gewährleistet werden. Allerdings hat es sich gezeigt, daß trotz der Verwendung von Strömungskonditionierern der vorgenannten Art bereits geringfügige Störungen der Strömung im Einlaufbereich des Meßsystems, insb. auch in dem dem eigentlichen Meßsystem vorgelagerten Zulaufsegment der angeschlossenen Prozeßleitung oder im Bereich des gegebenenfalls zur Verbindung von Zulaufsegment und Meßsystem dienenden einlaßseitigen Anschlußflansches, eine erhebliche Variation der Strömungsverhältnisse innerhalb des Meßrohrlumens und damit einhergehend eine entsprechende Verschlechterung der Meßgenauigkeit zu verzeichnen sind.

Eine Möglichkeit zur Behebung dieses Problems besteht vordergründig darin, eine entsprechende Bearbeitung auch des Einlaufbereichs des Meßsystems, also des Zulaufsegment der Prozeßleitung oder der einlaßseitigen Flanschverbindung vorzunehmen. Praktisch ist dies jedoch eher kaum durchführbar, jedenfalls aber dem Anwender des Meßsystems nicht ohne weiters zuzumuten. Dies im besonderen auch deshalb, weil die Wahl für das Meßsystem durchaus auch dadurch bedingt sein kann, daß in einer bestehenden Anlange ein zuvor installiertes, hinsichtlich der tatsächlichen Strömungsverhältnisse jedoch möglicherweise überdimensioniertes Meßsystem ad hoc ausgetauscht werden soll. Insoweit ist also die tatsächliche Einbausituation für das Meßsystem nicht nur als nicht vorhersehbar, sondern auch als praktisch nicht adaptierbar und insoweit auch als nicht kontrollierbar anzusehen.

Eine weitere Möglichkeit zu Umgehung dieses Problems besteht ferner darin, die Einbaulänge des Strömunsgkonditionierers zu vergrößern, um so bereits im Strömungskonditionierer eine weitgehende insoweit eine Stabilisierung und Beruhigung der Strömung, möglichst also vor deren Eintritt in das Meßrohr zu erzielen. Allerdings kann dies zu einer beträchtlichen Erhöhung der Einbaulänge des gesamten Meßsystems führen. Im Hinblick auf die oben erwähnte Situation, bei der ein bestehendes herkömmliches Meßsystem durch ein solches mit vorgeschaltetem Strömungskonditionierer ersetzt werden soll, ist die Einbaulänge für das Meßsystem mehr oder minder fest vorgegeben und somit auch einer Erhöhung der Einbaulänge des Strömungskonditionierers nur in diesem eher begrenzten Maße möglich. Angesichts der Nachteile von herkömmlichen Strömungskonditionierern kann es nicht verwundern, daß die Anwendungsbreite von Meßsystemen der in Rede Art nach wie vor als eher beschränkt anzusehen ist.

Eine Aufgabe der Erfindung besteht daher darin, ein Meßsystem für ein strömendes Medium zu schaffen, das bei möglichst kurze Einbaulänge ein Erhöhung der Reynoldszahl der Strömung von der Prozeßleitung hin zum Meßrohr ermöglicht und das trotzdem eine gegenüber allfälligen Störungen im strömenden Medium stromaufwärts des Meßsystems, sei es im Zulaufsegment und/oder im unmittelbaren Übergangsbereich zwischen Prozeßleitung und eigentlichem Meßsystem, weitgehend unempfindliche Meßgenauigkeit aufweist.

Zur Lösung der Aufgabe besteht die Erfindung in einer Prozeßleitung, insb. einer Rohrleitung, gemäß Anspruch 1.

Ein Grundgedanke der Erfindung besteht darin, die Meßgenauigkeit von Meßsystemen der beschriebenen Art nicht nur dadurch zu verbessern, daß die Strömung ausreichend beschleunigt und somit sicher in einen günstigen Reynoldszahlbereich transformiert wird, sondern auch dadurch, daß einerseits allfällig stromaufwärts des Meßsystems in die Strömung eingetragene Störungen, wie z.B. in deren rohrwandnahen Randbereichen "mitschwimmende" Wirbel, mittels des dem eigentlichen Meßaufnehmer vorgeschalteten Strömungskonditionierers weitgehend zu eliminieren und somit anderseits mittels des Strömungskonditionierers ein weitgehend störunempfindliches, für das Meßprinzip ausreichend gut reproduzierbares Strömungsprofil für das in den Meßaufnehmer einströmende Medium unmittelbar vor diesem neu einzustellen.

Dies erfolgt bei dem erfindungsgemäßen Meßsystem im besonderen dadurch, daß in dessen Einlaufbereich wenigstens ein im wesentlichen toroidaler Wirbel erzeugt wird, der zumindest in einem stationären Zustand weitgehend ortsfest gehalten ist. Dieser stationäre Wirbel wirkt für das vorbeiströmenden Medium praktisch als eine zusätzliche Querschnittsverengung und insoweit effektiv als eine "virtuelle" Düse, die innerhalb des strömenden Mediums intrinsisch gebildet ist.

Eine besondere Eigenschaft einer solchen "virtuellen" Düse besteht u.a. darin, daß sie vor dem Einlaufbereich in die Strömung allfällig induzierte Störungen weitgehend eliminiert und darüber hinaus stromab ein weitgehend ungestörtes Strömungsprofil praktisch neu aufbaut. Dabei paßt sich die Größe und Stärke des toroidalen Wirbels erfreulicherweise sogar an Größe und Stärke der einlaufenden Störung an, so daß die so geschaffene "virtuelle" Düse praktisch im Sinne einer wirkungsvollen Störungsbeseitigung selbst adaptierend ist.

Die Erfindung basiert dabei auf der überraschenden Erkenntnis, daß ein solcher stationärer, insb. auch weitgehend ortsfester, Wirbel mittels einer im Einlaufbereich des Meßsystems plazierten, in einem Randbereich des vom Medium durchströmten Lumens als definierte Störung wirkenden Strömungshindernisses - hier einer möglichst frontal angeströmten und möglichst vollständig, insb. zirkulär, umlaufenden Prallfläche - erzielt werden kann.

Die Wirkung der mittels des toroidalen Wirbels erzeugten "virtuellen" Düse läßt sich zudem dadurch noch weiter verbessern, daß stromabwärts des vor der Prallfläche erzeugten Wirbels ein weiterer, gleichermaßen möglichst ortsfester Wirbel im Strömungskonditionierer stationiert wird, gegebenenfalls auch unmittelbar hinter dem ersten Wirbel. Dies kann bei dem erfindungsgemäßen Strömungskonditionierer auf konstruktiv sehr einfache Weise dadurch erreicht werden, daß ferner eine die Prallfläche begrenzende, insb. gleichermaßen zirkulär umlaufende, scharfe Innenkante vorgesehen ist, die auf das vorbeiströmende Medium in einer für die Wirbelbildung ausreichenden Weise als Abreißkante wirkt.

Durch die Ausbildung von zwei solchen toroidalen, insb. auch zueinander weitgehend konzentrisch ausgerichteten, Wirbeln können einerseits im einströmenden Medium mitschwimmende Wirbel besser aufgenommen und somit wirksamer eliminiert werden. Anderseits wird mittels zweier solcher hintereinander stehend, konzentrischen Wirbeln die effektiv wirksame Kontur der so gebildeten "virtuellen" Düse praktisch einer S-Form angenährt, die die Ausbildung eines für die nachfolgende Messung sehr gut geeigneten, gleichermaßen auch über einen weiten Anwendungsbereich gut reproduzierbaren Strömungsprofils begünstigt. Somit kann trotz allfällig gestörter Strömung im Zulaufsegment dem Meßaufnehmer über den Strömungskonditionierer Medium mit einem solchen Strömungsprofil zugeführt werden, das einer kalibrierten Situation zumindest weitgehend ähnlich ist.

Die Verwendung eines Strömungskonditionieres gemäß der vorliegenden Erfindung hat beispielsweise bei den eingangs erwähnten Vortex-Meßgeräten u.a. auch den Vorteil, daß sie trotz vergleichsweise großer Unterschiede zwischen dem Kalibern des Zulaufsegments der angeschlossenen Prozeßleitung und dem Kaliber des Meßrohr, z.B. über zwei nominelle Nennweitenstufen, auch für die Messung von vergleichsweise langsam strömenden Gasen geeignet sind. Dies im besonderen auch deshalb, weil auf diese Weise zumindest für das Meßvolumen, insb. auch für im Einlaßbereich des Meßsystems zunächst gestörte Strömungsprofile, eine weitgehende Unabhängigkeit der Strouhalzahl über den Meßrohrquerschnitt geschaffen werden kann.

Fig. 1    zeigt perspektivisch in einer Seitenansicht ein Meßsystem für ein in einer Prozeßleitung strömendes Medium,

Fig. 2, 3    zeigen einen für die Verwendung in einem Meßsystem gemäß Fig. 1 geeigneten, nach dem Vortex-Prinzip arbeitenden Wirbel-Meßaufnehmer, und

Fig. 4 bis 7    zeigen schematisch im Querschnitt Einzelheiten des Meßsystems gemäß Fig. 1.

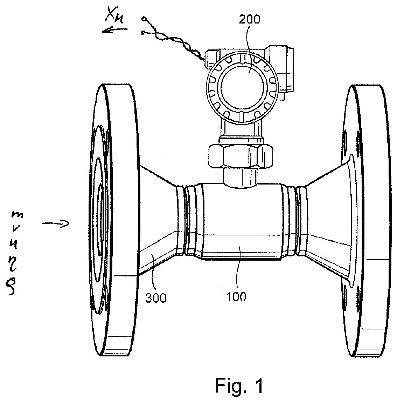

In der Fig. 1 ist ein gegebenenfalls auch modular aufgebautes, Meßsystem schematisch dargestellt, das dafür geeignet und dafür vorgesehen ist, wenigstens eine Meßgröße, insb. einen Massendurchfluß $m$ und/oder Volumendurchfluß $v$ und/oder eine Strömungsgeschwindigkeit $u$ und/oder einen andern Strömungsparameter eines in einer - hier nicht dargestellten - Prozeßleitung strömenden Mediums, beispielsweise einer Flüssigkeit, einem Gas, einem Dampf oder dergleichen, sehr robust zu messen und in wenigstens einen entsprechenden Messwert $X_M$ abzubilden. Das Meßsystem umfaßt dafür wenigstens ein In-Line-Meßgerät für strömende Medien, das mittels eines entsprechenden Meßaufnehmers 100 sowie einer mit diesem zumindest zeitweise elektrisch gekoppelte Meßelektronik des Meßsystems gebildet ist. Das In-Line-Meßgerät umfaßt einen im Betrieb vom zumessenden Medium durchströmten Meßaufnehmer 100 sowie ein Elektronik-Gehäuse 200, in dem eine mit dem Meßaufnehmer 100 elektrisch verbundene - hier nicht näher zu erläuternde - Meßelektronik untergebracht ist.

Der Meßaufnehmer 100 weist wenigstens ein in den Verlauf der, insb. als Rohrleitung ausgebildeten, Prozeßleitung eingesetztes Meßrohr auf, durch das im Betrieb des Meßsystems zumindest zeitweise das zu messenden Medium hindurch strömen gelassen wird. Das In-Line-Meßgerät ist im besonderen dafür vorgesehen, zumindest zeitweise wenigstens ein Meßsignal zu erzeugen, das von wenigstens einem physikalischen Parameter, insb. einer Strömungsgeschwindigkeit, einem Massendurchfluß $m$, einem Volumendurchfluß $v$, einer Dichte $r$ und/oder einer Viskosität $h$, des im Meßrohr befindlichen Mediums beeinflußt ist und insoweit mit der Meßgröße entsprechend korrespondiert. Zum Erzeugen des wenigstens einen Meßsignals dient hierbei eine am Meßrohr und/oder in dessen Nähe angeordnete Sensoranordnung des In-Line-Meßgeräts, die zumindest mittelbar auf Änderungen der wenigstens einen Meßgröße des Mediums in einer das wenigstens eine Meßsignal entsprechend beeinflussenden Weise reagiert.

Gemäß einer vorteilhaften Ausgestaltung der Erfindung ist die Meßelektronik ferner so ausgelegt, daß sie im Betrieb das Meßsystem mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beipielsweise einem Feldbussystem, Meß- und/oder andere Betriebsdaten, insb. auch den wenigstens einen Messwert $X_M$, austauschen kann. Für diesen vorgenannten Fall, daß das Meßsystem für eine Ankopplung an ein Feldbus- oder ein anderes Kommunikationssystem vorgesehen ist, weist die Meßgerät-Elektronik eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Auch hierfür können in beispielsweise in der industriellen Meß- und Automatisierungstechnik entsprechend etablierte Standardschnittstellen zum Einsatz kommen. Von Darüber hinaus kann auch die externe Energieversorgung an das Feldbussystem angeschlossen sein und das Meßsystem in der vorbeschriebenen Weise direkt via Feldbussystem mit Energie versorgen.

Im hier gezeigten Ausführungsbeispiel dient ein Wirbeldurchfluß-Meßgerät als In-Line-Meßgerät, das bekanntlich gut für die Messung von Gasen geeignet ist, die physikalische Meßgröße, insb. den Massendurchfluß $m$, die Dichte $r$ und/oder die Viskosität $h$, des zu messenden Mediums hochgenau zu erfassen. Allerdings können hierbei auch andere, in der Prozeßautomatisierungstechnik gleichermaßen etablierte In-Line-Meßgeräte zum Ermitteln der Meßgröße verwendet werden, wie z.B. magnetisch-induktive Durchflußmesser, Coriolis-Durchflußmeßgeräte, thermische Durchflußmesser, Differenzdruck-Durchflußmesser, Ultraschall-Durchflußmeßgeräte oder dergleichen.

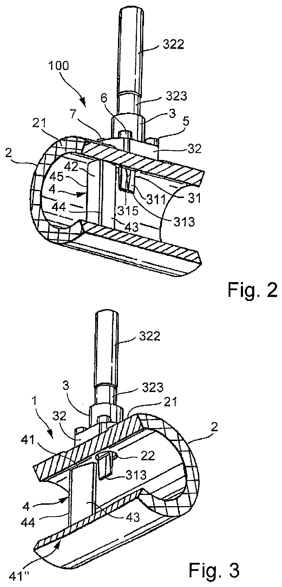

Die in den Fig. 2 und 3 gezeigten und der Übersicht dienenden perspektivischen Ansichten eines Ausführungsbeispiel für einen Wirbel-Meßaufnehmer nach dem Vortex-Prinzip zeigen, einerseits in Strömungsrichtung gesehen (Fig. 2) und andererseits gegen die Strömungsrichtung gesehen (Fig. 3), einen teilweise aufgeschnittenen Meßaufnehmer 1 eines Vortex-Durchflußmeßgeräts mit einem an einer Rohrwand 21 eines Meßrohrs 2 fixierten und durch eine Bohrung 22 hindurch ragenden Wirbelsensor 3. Dieser kann beispielsweise ein dynamisch kompensierter Wirbelsensor mit einem kapazitiven Sensorelement, wie er in der US-A 60 03 384 beschrieben ist, sein.

Entlang eines Durchmessers des Meßrohrs 2 ist in dessen Innerem ein Staukörper 4 angeordnet, der mit dem Meßrohr 2 unter Bildung einer dargestellten ersten Fixierstelle 41 und einer verdeckten zweiten Fixierstelle41 * fest verbunden ist. Das Zentrum der Bohrung 22 und das Zentrum der Fixierstelle 41 liegen auf einer Mantellinie des Meßrohrs 2.

Der Staukörper 4 hat eine Prallfläche 42, gegen die im Betrieb ein zu messendes Medium, z. B. eine Flüssigkeit, ein Gas oder ein Dampf, anströmt. Der Staukörper 4 hat ferner zwei Seitenflächen, von denen lediglich eine (vordere) Seitenfläche 43 in den Fig. 1 und 2 zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 1 zu sehen sind.

Der Staukörper 4 der Fig. 1 und 2 hat im wesentlichen die Form einer geraden Dreieck-Säule, also einer Säule mit einem dreieckigen Querschnitt. Es können jedoch auch andere übliche Formen des Staukörpers bei der Erfindung verwendet werden.

Durch das Anströmen des Mediums gegen die Prallfläche 42 bildet sich stromabwärts vom Staukörper 4 in der bekannten Weise eine Kärmän'sche Wirbelstrasse dadurch aus, dass an jeder Abrisskante abwechselnd Wirbel abreissen und vom strömenden Medium mitgenommen werden. Diese Wirbel erzeugen lokale Druckschwankungen im strömenden Medium, deren zeitbezogene Abriss-Häufigkeit, also deren sogenannte Wirbelfrequenz, ein Mass für die Strömungsgeschwindigkeit und/oder den Volumendurchfluss des Mediums ist.

Die Druckschwankungen werden mittels des Wirbelsensors 3 in ein als elektrisches Meßsignal dienendes Wirbelsignal umgeformt, das einer im Elektronik-Gehäuse untergebrachten - hier jedoch nicht gezeigten und nicht näher erläuterten - Meßelektronik zugeführt wird, die daraus beispielsweise die Strömungsgeschwindigkeit und/oder den Volumendurchfluß des strömenden Mediums entsprechend berechnet.

Der Wirbelsensor 3 ist stromabwärts vom Staukörper 4 in die Bohrung 22 der Rohrwand 21 des Meßrohrs 2 eingesetzt und dichtet die Bohrung 22 zur Mantelfläche des Meßrohrs 2 hin ab, wozu der Wirbelsensor 3 mit der Rohrwand 21 verschraubt ist. Hierzu dienen z. B. vier Schrauben, von denen in den Fig. 1 und 2 die Schrauben 5,6, 7 zu sehen sind, während in Fig. 3 zugehörige Bohrungen 50,60, 70,80 dargestellt sind.

Vom Wirbelsensor 3 ist eine in den Fig. 1 und 2 in das Innere des Meßrohrs 2 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünnerwandigen Zwischenstücks 323 in eine Verlängerung 322 aus, vgl. die erwähnte US-A 60 03 384.

Die Sensorfahne 31 hat Hauptflächen, von denen in den Fig. 1 und 2 nur die Hauptfläche 311 zu sehen ist. Die Hauptflächen fluchten mit der erwähnten Mantellinie des Meßrohrs 2 und bilden eine Frontkante 313. Die Sensorfahne 31 kann auch andere geeignete Raumformen haben; so kann sie z. B. zwei parallele Hauptflächen aufweisen, die zwei parallele Frontkanten bilden.

Die Sensorfahne 31 ist kürzer als der Durchmesser des Meßrohrs2 ; sie ist ferner biegesteif und weist ein Sackloch. Damit das Sackloch einen ausreichenden Durchmesser hat, treten aus den Hauptflächen Wandteile hervor, von denen in Fig. 3 der Wandteil 315 angedeutet ist. Das Sackloch reicht bis in die Nähe der Frontkante 313 und hat dort einen Boden.

Zum Wirbelsensor 3 gehört ferner eine die Bohrung 22 überdeckende Membran 33
mit einer dem Medium zugewandten ersten Oberfläche und einer vom Medium abgewandten zweiten Oberfläche. An der ersten Oberfläche ist die Sensorfahne 31 fixiert und an der zweiten Oberfläche ein Sensorelement. Bevorzugt sind die Sensorfahne 31, die Membran 33, deren ringförmiger Rand und der an der Membran 33 befestigte Teil des Sensorelements aus einem einzigen Materialstück, z. B. Metall, insb. Edelstahl, hergestellt. Das Sensorelement erzeugt das oben erwähnte Signal, dessen Frequenz proportional zum Volumendurchfluss des strömenden Mediums ist.

Beim erfindungsgemäßen Meßsystem weist das dem Führen von zu messendem Medium dienenden, insb. im wesentlichen gerade, Meßrohr einen kleineren Strömungsquerschnitt A1 auf, als ein einlaßseitig an das Meßsystem angeschlossenes Zulaufsegment 400 der Prozeßleitung. Daher umfaßt das Meßsystem ferner einen einlaßseitig des Meßrohrs angeordneten, zwischen diesem und dem Zulaufsegment der Prozeßleitung vermittelnden Strömungskonditionierer 300, der ein sich zum Meßrohr 2 hin verjüngendes, im Betrieb vom Medium durchströmtes Lumen aufweist. Ein dem Zulaufsegment der Prozeßleitung zugewandtes Einlaßende des Strömungskonditionierers weist dabei einen Strömungsquerschnitt a auf, der größer als der Strömungsquerschnitt A1 des Meßrohrs ist, während ein dem Meßrohr zugewandtes Auslaßende des Strömungskonditionierers einen Strömungsquerschnitt aufweist, der kleiner als der Strömungsquerschnitt des Einlaßendes des Strömungskonditionierers ist. Im Meßbetrieb wird das zu messende Medium aus dem Zulaufsegment in den Strömungskonditionierer einströmengelassen und aufgrund des geringer werdenden Strömungsquerschnitts in Richtung der gedachten Längsachse des Strömungskonditionerers beschleunigt.

Beim erfindungsgemäßen Meßsystem weist der Strömungskonditionierer des weiteren wenigstens eine stromaufwärts von dessen Auslaßende angeordnete, in das Lumen des Strömungskonditionierers hineinragende, insb. entlang einer Mantellinie des Strömungskonditionierers umlaufende und/oder zirkuläre, Prallfläche P auf. Die Prallfläche ist dabei so ausgebildet und im Strömungskonditionierer angeordnet, daß sie von dem im Meßbetrieb in den Strömungskonditionierer einströmen gelassenen Medium zunächst praktisch frontal angeströmt ist. Aufgrund des sich an der Prallfläche P abrupt oder sprunghaft verringernden Strömungsquerschnitts wird das anströmende Medium daselbst aufgestaut. Dadurch bildet sich stromauf der Prallfläche P schließlich ein im wesentlichen toroidaler, zumindest im stationären Zustand weitgehend ortsfester erster Wirbel w2 aus, der in seinen Ausmaßen zum einen durch die Einlaßgeometrie des Strömungskonditionierers, insb. auch dessen Prallfläche, und zum anderen durch das strömende Medium selbst bestimmt ist. Praktisch gesehen wird somit durch den Wirbel w2 im Einlaßbereich des Strömungskonditionierers eine Düse virtuell gebildet, die nicht nur weitgehend stetig in ihrer Kontur ist sondern, die sich zudem auch selbst an die tatsächliche Strömung optimal anpaßt. Für das durch den Wirbel w2 weiter hindurchströmende Medium wirkt dieser zumindest insoweit als für das darauffolgende sich einstellende Strömungsprofil insgesamt stabilisierend, als er die durch die Prallfläche P zunächst verursachte sprunghafte Querschnittsverjüngung im wesentlichen stetig ausgleicht und somit praktisch in eine sanfte, gleichwohl aber die Strömung weiter beschleunigende Querschnittsverringerung überführt. Die Prallfläche P ist gemäß einer Ausgestaltung der Erfindung ferner so im Strömungskonditionierer angeordnet und ausgerichtet, daß sie zumindest abschnittsweise im wesentlichen senkrecht zu einer gedachten Längsachse des Strömungskonditionierers und/oder daß sie im wesentlichen senkrecht zu einer gedachten Längsachse des Zulaufsegments verläuft. Dadurch wird der erste Wirbel w2 innerhalb des im Einlaßbereich des Strömungskonditionierers strömenden Medium in vorteilhafter Weise so ausgebildet, daß eine größte gedachte Trägheitshauptachse dieses Wirbels w2 mit der gedachten Längsachse des Strömungskonditionerers und/ oder einer gedachten Längsachse des Zulaufsegments im wesentlichen koinzidiert. Da sich besonders gute Ergebnisse, insb. hinsichtlich Ortsbeständigkeit und Reproduzierbarkeit des Wirbels w2, mit einer ausgeprägten Prallfläche P erzielt werden können, weist diese nach einer vorteilhaften Ausgestaltung der Erfindung in radialer Richtung eine Höhe h2 auf, die wenigstens 1 mm beträgt. Die Prallfläche P kann beispielsweise als eine im wesentlichen planare Kreisringfläche oder auch konusförmig, sich zum Meßrohr hin verjüngend bzw. zur Prozeßleitung hin aufweiten ausgebildet sein. Im hier gezeigten Ausführungsbeispiel ist die Prallfläche P zudem in der, insb. unmittelbaren, Nähe des Einlaßendes des Strömungskonditionierers angeordnet.

Gemäß einer Weiterbildung der Erfindung weist der Strömunsgkonditionier zusätzlich zur vorgenannten Prallfläche P eine stromab von dieser angeordneten wirbelablösenden Innenkante K auf. Für den vorbeschriebenen Fall, daß Medium durch den Strömungskonditionierer strömt, bildet sich stromab der Innenkante K zusätzlich zum ersten Wirbel w2 ein ebenfalls im wesentlichen toroidaler, zumindest im stationären Zustand gleichermaßen weitgehend ortsfester zweiter Wirbel w1 aus. Die Innenkante K ist gemäß einer weiteren Ausgestaltung der Erfindung dafür so ausgebildet und im Strömungskonditionierer angeordnet, daß sie im wesentlichen quer zu einer gedachten Längsachse des Strömungskonditionierers und/oder quer zu einer gedachten Längsachse des Meßrohrs ausgerichtet ist. Ferner ist die Innenkante K, insb. zirkulär, umlaufend und insoweit in sich geschlossen ausgebildet.

Im hier gezeigten Ausführungsbeispiel ist infolge der Positionierung der Prallfläche P in der, insb. unmittelbaren, Nähe des Einlaßendes des Strömungskonditionierers auch die Innenkante K in dessen Einlaßbereich angeordnet. Da sich besonders gute Ergebnisse mit einer ausgeprägten, vergleichsweise scharfen Innenkante erzielt werden können, weist diese in einer vorteilhaften Ausgestaltung einen Kantenradius auf, der kleiner als 2 mm, insb. kleiner 0,6 mm, ist.

Zur weiteren Verbesserung des Strömungsprofils kann es zudem von Vorteil, die Prallfläche als eine sphärische geformte und/oder zerklüftete, insb. gezackte, oder gewellte Kreisringfläche und/oder die Innenkante mit gezackte oder gewellte Kontur auszubilden, wodurch eine noch weitere verstärkte Durchmischung des an- oder vorbeiströmenden Mediums und insoweit eine noch drastischere Neuordnung des Strömungsprofils erzielt werden kann.

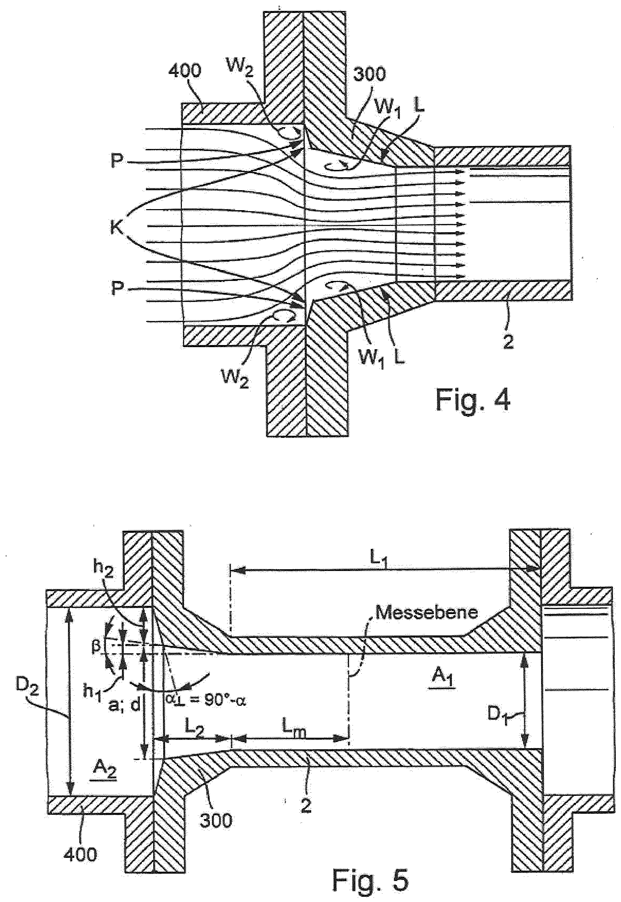

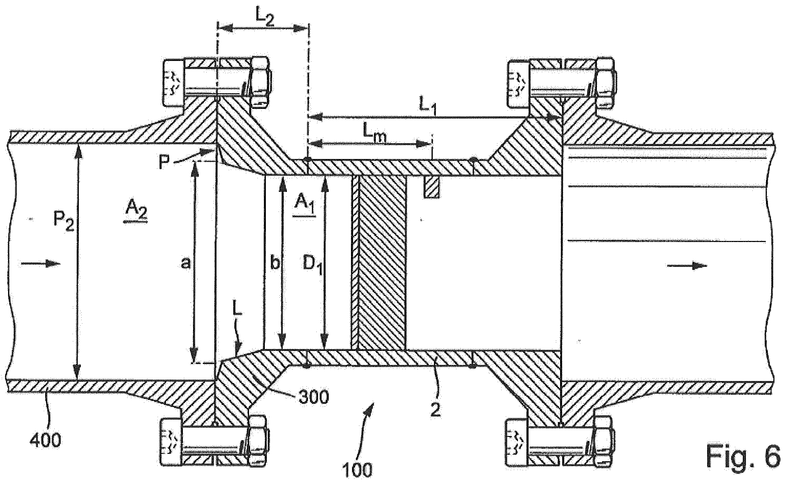

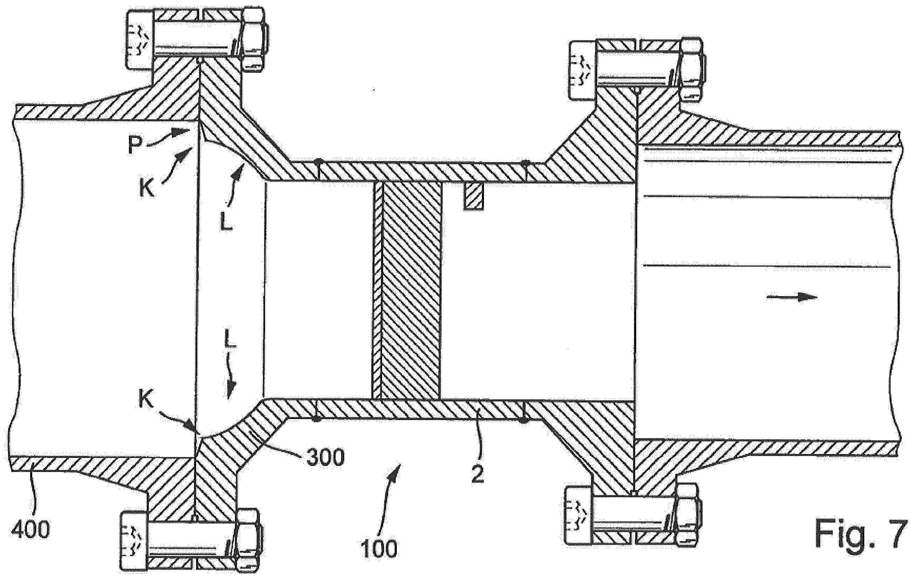

Wie aus der Fig. 4 ersichtlich, ist die den zweiten Wirbel w1 erzeugende Innenkante K dadurch gebildet, daß die Prallfläche P praktisch unvermittelt, also ohne sanften oder stetigen Ausgleich, auf eine sich in Richtung des Auslaßende des Strömungskonditionierers erstreckende, dem Führen von im Strömungskonditionierer strömendem Medium dienende Leitfläche L stößt, die insoweit also ebenfalls von der Innenkante K begrenzt ist. Die sich zum Meßrohr hin verjüngende Leitfläche L kann beispielsweise, wie auch in den Fig. 4 bis 7 gezeigt, im wesentlichen konisch geformt sein.

Die Innenkante K ist gemäß einer weiteren Ausgestaltung der Erfindung ferner so ausgebildet, daß in dem daran vorbeiströmenden Medium der zweite Wirbel w1 in der Weise gebildet wird, daß eine größte gedachte Trägheitshauptachse des Wirbels w1 mit der gedachten Längsachse des Strömungskonditionierers und/oder einer gedachten Längsachse des Meßrohrs im wesentlichen koinzidiert. Für das an Wirbel w1 vorbeiströmende Medium wirkt dieser sowohl weiter querschnittsverengend wie auch zur Leitfläche L hin vermittelnd und insoweit für das Strömungsprofil stabilisierend.

Für den hier gezeigten Fall, daß wenigstens ein weiterer im wesentlichen stationärer, weitgehend ortsfester toroidaler Wirbel im Einlaßbereich des Strömungskonditionierers induziert wird, ergibt sich zusätzlich zu dem vom ersten Wirbel w2 geschaffenen sanften Querschnittsverringerung effektiv eine zusätzliche, gleichermaßen stetige Querschnittsverengung und insoweit auch eine noch mehr erhöhte Beschleunigung des durch die im Einlaßbereich stationierten toroidalen Wirbel hindurchströmenden Mediums, einhergehend mit einer Erhöhung von dessen Reynoldszahl. Bei der hier gezeigten Konfiguration des Meßsystems, bei der das Lumen des Strömungskondiditionieres durch einen um seine Längsachse im wesentlichen rotationssymmetrischen Konus definierte und die Längsachsen des Zulaufsegments und des Strömunsgkonditionierers im wesentlichen miteinander koinzidieren, bilden sich die beiden Wirbel w2, w1 so aus, daß die größte gedachte Trägheitshauptachse jedes der beiden Wirbel w1, w2 miteinander im wesentlichen koinzidieren. Dies wiederum führt dazu, daß in vorteilhafter Weise auch die somit im Einlaßbereich virtuell gebildete Düse bezüglich der Längsachse des Strömunsgkonditionierers weitgehend rotationssymmetrisch ist. Dies hat u.a. den Vorteil, daß das mittels einer solchen Düse gebildete Strömungsprofil ebenfalls weitgehend rotationssymmetrisch ist. Dadurch kann wiederum erreicht werden, daß, insb. im angeschlossenen Meßrohr, die Strouhalzahl über den Rohrquerschnitt gesehen weitgehend konstant gehalten ist. Damit einhergehend können zum einen die Strömungsverhältnisse im zu messenden Medium über einen weiten Anwendungsbereich stabil und somit gut reproduzierbar oder auch vorhersehbar gehalten werden. Zum anderen kann so auch für viele Anwendungen mit eingangsseitig gestörten Strömungsprofilen von einer Strouhalzahl ausgegangen, die über einen weiten Anwendungsbereich in guter Nährung konstant gehalten ist oder sich lediglich in bekannter Weise in Abhängigkeit von der Reynoldszahl ändert.

7

Weitere vorteilhafte Ausgestaltungen und besondere Ausführungen, insb. auch als vorteilhaft aufgefundene Dimensionierungen für die einzelnen Elemente des erfindungsgemäßen Strömungskonditionierers sind in nachfolgenden Tabellen 1, 2 wie auch in den nachstehenden Patentansprüchen aufgeführt, worin u.a. sind:

A1 - Strömungsquerschnitt des Meßrohrs,

A2 - Strömungsquerschnitts des Zulaufsegments der Prozeßleitung,

A2/A1 - Querschnittsverhältnis des Strömungsquerschnitts A2 des Zulaufsegments der Prozeßleitung zum Strömungsquerschnitt A1 des Meßrohrs,

a - von der Innenkante K begrenzter Querschnitt des Lumens des Strömungskonditionierers,

a/A1 - Kontraktionsverhältnis des durch die Innenkante begrenzten Querschnitts a zum Strömungsquerschnitt A1 des Meßrohrs,

A2/A1-a/A1 - Differenz zwischen dem Querschnittsverhältnis A2/A1 und dem Kontraktionsverhältnis a/A1,

a/A2 - Einschnürungsverhältnis des durch die Innenkante begrenzten Querschnitts a zum Strömungsquerschnitt A2 des Zulaufsegments der Prozeßleitung,

A2/A1-a/A2 - Differenz zwischen dem Querschnittsverhältnis A2/A1 und dem Einschnürungsverhältnis a/A2,

D1 - Kaliber des Meßrohrs,

D2 - Kaliber des Zulaufsegments der einlaßseitig an das Meßsystem angeschlossen Prozeßleitung,

D2/D1 - Kaliberverhältnis des Kaliber D2 des Zulaufsegments der Prozeßleitung zum Kaliber D1 des Meßrohrs,

d - Durchmesser des durch die Innenkante K begrenzten Querschnitts des Lumens des Strömungskonditionierers,

L1 - Einbaulänge des Meßrohrs,

L2 - Einbaulänge des Strömungskonditionierers,

Lm - Abstand des Sensorelements vom Einlaßende des Meßrohrs,

$\alpha$ - Flankenwinkel eines die Prallfläche des Strömungskonditionierers bildenden Innenkonus

$$(\alpha = 90° - \alpha\perp),$$

$\beta$ - Flankenwinkel eines die Leitfläche des Strömungskonditionierers bildenden Innenkonus,

## Tabelle 1:

| D1 | | D2/D1 | d/D1 | D2/d | A2/A1 | a/A1 | a/A2 | (A2-a)/A1 | (a-A1)/A2 | (A2-a)/a | (a-A1)/A1 |
|---|---|---|---|---|---|---|---|---|---|---|---|
| 15 | min | 1.75 | 1.58 | 1.10 | 3.06 | 2.51 | 0.26 | 0.55 | 0.16 | 0.22 | 1.51 |
| 15 | max | 3.10 | 1.58 | 1.96 | 9.61 | 2.51 | 0.82 | 7.11 | 0.49 | 2.84 | 1.51 |
| 25 | min | 1.57 | 1.23 | 1.27 | 2.46 | 1.52 | 0.30 | 0.93 | 0.10 | 0.61 | 0.52 |
| 25 | max | 2.24 | 1.23 | 1.82 | 5.03 | 1.52 | 0.62 | 3.51 | 0.21 | 2.30 | 0.52 |
| 40 | min | 1.29 | 1.18 | 1.09 | 1.67 | 1.40 | 0.30 | 0.27 | 0.08 | 0.20 | 0.40 |
| 40 | max | 2.17 | 1.18 | 1.83 | 4.69 | 1.40 | 0.84 | 3.29 | 0.24 | 2.36 | 0.40 |
| 50 | min | 1.50 | 1.15 | 1.30 | 2.24 | 1.32 | 0.28 | 0.93 | 0.07 | 0.70 | 0.32 |
| 50 | max | 2.18 | 1.15 | 1.90 | 4.74 | 1.32 | 0.59 | 3.42 | 0.14 | 2.59 | 0.32 |
| 80 | min | 1.32 | 1.18 | 1.11 | 1.73 | 1.39 | 0.30 | 0.34 | 0.08 | 0.24 | 0.39 |
| 80 | max | 2.16 | 1.18 | 1.83 | 4.67 | 1.39 | 0.80 | 3.28 | 0.23 | 2.35 | 0.39 |
| 100 | min | 1.51 | 1.15 | 1.31 | 2.27 | 1.33 | 0.29 | 0.94 | 0.07 | 0.71 | 0.33 |
| 100 | max | 2.14 | 1.15 | 1.85 | 4.57 | 1.33 | 0.59 | 3.23 | 0.15 | 2.43 | 0.33 |
| 150 | min | 1.41 | 1.39 | 1.02 | 1.99 | 1.92 | 0.61 | 0.07 | 0.29 | 0.04 | 0.92 |
| 150 | max | 1.78 | 1.39 | 1.28 | 3.17 | 1.92 | 0.96 | 1.25 | 0.46 | 0.65 | 0.92 |
| 200 | min | 1.32 | 1.15 | 1.02 | 1.73 | 1.33 | 0.29 | 0.07 | 0.07 | 0.04 | 0.33 |
| 200 | max | 2.16 | 1.39 | 1.85 | 4.67 | 1.92 | 0.96 | 3.28 | 0.46 | 2.43 | 0.92 |
| 250 | min | 1.32 | 1.15 | 1.02 | 1.73 | 1.33 | 0.29 | 0.07 | 0.07 | 0.04 | 0.33 |
| 250 | max | 2.16 | 1.39 | 1.85 | 4.67 | 1.92 | 0.96 | 3.28 | 0.46 | 2.43 | 0.92 |
| 300 | min | 1.32 | 1.15 | 1.02 | 1.73 | 1.33 | 0.29 | 0.07 | 0.07 | 0.04 | 0.33 |
| 300 | max | 2.16 | 1.39 | 1.85 | 4.67 | 1.92 | 0.96 | 3.28 | 0.46 | 2.43 | 0.92 |
| 350 | min | 1.32 | 1.15 | 1.02 | 1.73 | 1.33 | 0.29 | 0.07 | 0.07 | 0.04 | 0.33 |
| 350 | max | 2.16 | 1.39 | 1.85 | 4.67 | 1.92 | 0.96 | 3.28 | 0.46 | 2.43 | 0.92 |
| 400 | min | 1.32 | 1.15 | 1.02 | 1.73 | 1.33 | 0.29 | 0.07 | 0.07 | 0.04 | 0.33 |
| 400 | max | 2.16 | 1.39 | 1.85 | 4.67 | 1.92 | 0.96 | 3.28 | 0.46 | 2.43 | 0.92 |
| 500 | min | 1.32 | 1.15 | 1.02 | 1.73 | 1.33 | 0.29 | 0.07 | 0.07 | 0.04 | 0.33 |
| 500 | max | 2.16 | 1.39 | 1.85 | 4.67 | 1.92 | 0.96 | 3.28 | 0.46 | 2.43 | 0.92 |
| 600 | min | 1.32 | 1.15 | 1.02 | 1.73 | 1.33 | 0.29 | 0.07 | 0.07 | 0.04 | 0.33 |
| 600 | max | 2.16 | 1.39 | 1.85 | 4.67 | 1.92 | 0.96 | 3.28 | 0.46 | 2.43 | 0.92 |

### Tabelle 2:

| D1 | (A2/A1)+(a/A1) | (A2/A1)+(a/A2) | (D2-d)/D1 | (d-D1)/D2 | (D2-d)/d | (d-D1)/D1 | (D2/D1)+(d/D2) | L1/D2 | L1/D1 | L2/D2 | L2/D1 |
|---|---|---|---|---|---|---|---|---|---|---|---|
| 15 min | 0.55 | 2.24 | 0.17 | 0.19 | 0.10 | 0.58 | 0.84 | 3.75 | 11.62 | 0.89 | 2.77 |
| 15 max | 7.11 | 9.35 | 1.52 | 0.33 | 0.96 | 0.58 | 2.59 | 6.64 | 11.62 | 1.59 | 2.77 |
| 25 min | 0.93 | 1.84 | 0.33 | 0.10 | 0.27 | 0.23 | 0.78 | 3.17 | 7.11 | 0.50 | 1.12 |
| 25 max | 3.51 | 4.73 | 1.01 | 0.15 | 0.82 | 0.23 | 1.69 | 4.54 | 7.11 | 0.71 | 1.12 |
| 40 min | 0.27 | 0.83 | 0.11 | 0.08 | 0.09 | 0.18 | 0.38 | 2.03 | 4.39 | 0.40 | 0.86 |
| 40 max | 3.29 | 4.39 | 0.98 | 0.14 | 0.83 | 0.18 | 1.62 | 3.40 | 4.39 | 0.67 | 0.86 |
| 50 min | 0.93 | 1.66 | 0.35 | 0.07 | 0.30 | 0.15 | 0.73 | 2.00 | 3.36 | 0.32 | 0.71 |
| 50 max | 3.42 | 4.46 | 1.03 | 0.10 | 0.90 | 0.15 | 1.65 | 2.24 | 4.38 | 0.47 | 0.71 |
| 80 min | 0.34 | 0.93 | 0.14 | 0.08 | 0.11 | 0.18 | 0.42 | 1.49 | 2.53 | 0.40 | 0.86 |
| 80 max | 3.28 | 4.37 | 0.98 | 0.14 | 0.83 | 0.18 | 1.62 | 1.93 | 3.21 | 0.65 | 0.86 |
| 100 min | 0.94 | 1.69 | 0.35 | 0.07 | 0.31 | 0.15 | 0.74 | 1.10 | 2.36 | 0.34 | 0.74 |
| 100 max | 3.23 | 4.28 | 0.98 | 0.10 | 0.85 | 0.15 | 1.60 | 1.56 | 2.36 | 0.49 | 0.74 |
| 150 min | 0.07 | 1.03 | 0.03 | 0.22 | 0.02 | 0.39 | 0.43 | 0.15 | 0.22 | 1.03 | 1.83 |
| 150 max | 1.25 | 2.56 | 0.39 | 0.27 | 0.28 | 0.39 | 1.00 | 0.45 | 0.76 | 1.30 | 1.83 |
| 200 min | 0.07 | 0.93 | 0.03 | 0.07 | 0.02 | 0.15 | 0.42 | 0.15 | 0.22 | 0.34 | 0.74 |
| 200 max | 3.28 | 4.37 | 0.98 | 0.27 | 0.85 | 0.39 | 1.62 | 1.93 | 3.21 | 1.30 | 1.83 |
| 250 min | 0.07 | 0.93 | 0.03 | 0.07 | 0.02 | 0.15 | 0.42 | 0.15 | 0.22 | 0.34 | 0.74 |
| 250 max | 3.28 | 4.37 | 0.98 | 0.27 | 0.85 | 0.39 | 1.62 | 1.93 | 3.21 | 1.30 | 1.83 |
| 300 min | 0.07 | 0.93 | 0.03 | 0.07 | 0.02 | 0.15 | 0.42 | 0.15 | 0.22 | 0.34 | 0.74 |
| 300 max | 3.28 | 4.37 | 0.98 | 0.27 | 0.85 | 0.39 | 1.62 | 1.93 | 3.21 | 1.30 | 1.83 |
| 350 min | 0.07 | 0.93 | 0.03 | 0.07 | 0.02 | 0.15 | 0.42 | 0.15 | 0.22 | 0.34 | 0.74 |
| 350 max | 3.28 | 4.37 | 0.98 | 0.27 | 0.85 | 0.39 | 1.62 | 1.93 | 3.21 | 1.30 | 1.83 |
| 400 min | 0.07 | 0.93 | 0.03 | 0.07 | 0.02 | 0.15 | 0.42 | 0.15 | 0.22 | 0.34 | 0.74 |
| 400 max | 3.28 | 4.37 | 0.98 | 0.27 | 0.85 | 0.39 | 1.62 | 1.93 | 3.21 | 1.30 | 1.83 |
| 500 min | 0.07 | 0.93 | 0.03 | 0.07 | 0.02 | 0.15 | 0.42 | 0.15 | 0.22 | 0.34 | 0.74 |
| 500 max | 3.28 | 4.37 | 0.98 | 0.27 | 0.85 | 0.39 | 1.62 | 1.93 | 3.21 | 1.30 | 1.83 |
| 600 min | 0.07 | 0.93 | 0.03 | 0.07 | 0.02 | 0.15 | 0.42 | 0.15 | 0.22 | 0.34 | 0.74 |
| 600 max | 3.28 | 4.37 | 0.98 | 0.27 | 0.85 | 0.39 | 1.62 | 1.93 | 3.21 | 1.30 | 1.83 |

## Patentansprüche

1. Prozeßleitung, insb. Rohrleitung, mit einem in deren Verlauf eingesetzten Meßsystem zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in der Prozeßleitung strömenden Mediums, und mit einem einlaßseitig an das Meßsystem angeschlossenen Zulaufsegment (400),

   - wobei das Meßsystem umfaßt:
   - einen Meßaufnehmer (100)

   -- mit einem dem Führen von zu messendem Medium dienenden, insb. im wesentlichen gerades, Meßrohr, das einen kleineren Strömungsquerschnitt (A1) aufweist, als das einlaßseitig an das Meßsystem angeschlossene Zulaufsegment (400) der Prozeßleitung,
   -- mit wenigstens einem im Meßrohr (2) angeordneten Staukörper (4) und
   -- mit einer Sensoranordnung,

   --- die wenigstens ein primär auf die zu erfassende Meßgröße, insb. auch Änderungen derselben, reagierendes Sensorelement aufweist, das stromabwärts des wenigstens einen Staukörpers (4) angeordnet ist, und
   --- die mittels des wenigstens einen Sensorelements wenigstens ein von der Meßgröße beeinflußtes Meßsignal liefert,

   - eine mit dem Meßaufnehmer kommunizierende Meßelektronik, die unter Verwendung des wenigstens einen Meßsignals zumindest zeitweise wenigstens einen die Meßgröße momentan repräsentierenden Meßwert, insb. einen Massendurchfluß-Meßwert, Volumendurchfluß-Meßwert, einen Dichte-Meßwert, einen Viskositäts-Meßwert, einen Druck-Meßwert, einen Temperatur-Meßwert oder dergleichen, erzeugt, sowie
   - einen einlaßseitig des Meßrohrs angeordneten, zwischen diesem und dem Zulaufsegment (400) der Prozeßleitung vermittelnden Strömungskonditionierer (300), der ein sich zum Meßrohr (2) hin verjüngendes, im Betrieb vom Medium durchströmtes Lumen aufweist;
   - wobei ein dem Zulaufsegment der Prozeßleitung zugewandtes Einlaßende des Strömungskonditionierers (300) einen Strömungsquerschnitt (a) aufweist, der größer als der Strömungsquerschnitt (A1) des Meßrohrs (2) ist, und ein dem Meßrohr (2) zugewandtes Auslaßende des Strömungskonditionierers (300) einen Strömungsquerschnitt (b) aufweist, der kleiner als der Strömungsquerschnitt des Einlaßendes des Strömungskonditionierers (300) ist;

- wobei im Strömungskonditioner (300) wenigstens eine stromaufwärts des Auslaßendes des Strömungskonditionierers (300) angeordnete, in dessen Lumen hineinragende, insb. zirkuläre, Prallfläche (P) vorgesehen ist, die im Betrieb von zu messendem Medium angeströmt ist;

- und wobei der Strömungskonditionierer (300) wenigstens eine stromaufwärts von dessen Auslaßende angeordnete, in das Lumen des Strömungskonditionierers (300) hineinragende, nämlich zirkuläre Innenkante (K) aufweist, die den Querschnitt (a) des Lumens des Strömungskonditionierers (300) begrenzt und die im Betrieb von darin geführtem Medium angeströmt ist und die einen Kantenradius aufweist, der kleiner als 2 mm, insb. kleiner 0,6 mm, ist;

- wobei die Prallfläche (P) und die Innenkante (K) zumindest anteilig durch einen einlaßseitig im Strömungskonditionierer (300) eingeformten, insb. sich zu dessen Einlaßende hin erstreckenden, sich zum Meßrohr (2) hin verjüngenden Innenkonus gebildet sind;

- und wobei der Innenkonus einen Flankenwinkel (a) aufweist, der größer als 45°, insb. größer als 60°, und der kleiner als 90°, insb. kleiner als 88°, ist.

2. Prozeßleitung nach dem vorherigen Anspruch,

- wobei das Meßrohr (2) zumindest in einem Einlaßbereich im wesentlichen kreiszylindrisch geformt ist;
- wobei der Strömunsgkonditionierer (300) zumindest in einem Auslaßbereich im wesentlichen kreiszylindrisch geformt ist; und
- wobei das, insb. kreiszylindrische, Meßrohr (2) im wesentlichen gerade ist.

3. Prozeßleitung nach einem der vorherigen Ansprüche,

- wobei die wenigstens eine in das Lumen des Strömungskonditionierers (300) hineinragende Innenkante so ausgebildet und im Strömungskonditionierer (300) angeordnete ist, daß sie im wesentlichen quer zu einer gedachten Längsachse des Strömungskonditionierers (300) und/oder quer zu einer gedachten Längsachse des Meßrohrs (2) ausgerichtet ist; und/oder
- wobei die wenigstens eine in das Lumen des Strömungskonditionierers (300) hineinragende Innenkante (K) eine dem Führen von im Strömungskonditionierer (300) strömendem Medium dienende, sich in Richtung des Auslaßende des Strömungskonditionierers (300) erstreckende Leitfläche (L) des Strömungskonditionieres (300) begrenzt.

4. Prozeßleitung nach einem der Ansprüche 1 bis 2,

- wobei die wenigstens eine in das Lumen des Strömungskonditionierers (300) hineinragende Innenkante eine dem Führen von im Strömungskonditionierer (300) strömendem Medium dienende, sich in Richtung des Auslaßende des Strömungskonditionierers (300) erstreckende Leitfläche (L) des Strömungskonditionieres (300) begrenzt, und
- wobei die Leitfläche (L) und die Innenkante (K) zumindest anteilig durch einen einlaßseitig im Strömungskonditionierer (300) eingeformten, insb. sich zu dessen Auslaßende hin erstreckenden, Innenkonus gebildet sind, der einen Flankenwinkel ($\beta$) aufweist, der größer als 2°, insb. größer 4°, und/oder der kleiner als 45°, insb. kleiner als 10°, ist.

5. Prozeßleitung nach dem vorherigen Anspruch, wobei die Prallfläche (P) durch einen einlaßseitig im Strömungskonditionierer (300) eingeformten, sich in Richtung von dessen Einlaßende erstreckenden ersten Innenkonus und die Leitfläche durch einen einlaßseitig im Strömungskonditionierer (300) eingeformten, sich in Richtung von dessen Auslaßende erstreckenden zweiten Innenkonus gebildet sind, derart, daß der die Prallfläche (P) bildende erste Innenkonus einen Flankenwinkel aufweist, der größer ist als ein Flankenwinkel des die Leitfläche (L) bildenden zweiten Innenkonus.

6. Prozeßleitung nach dem vorherigen Anspruch, wobei der die Prallfläche (P) des Strömungskonditionierers (300) bildende erste Innenkonus einen Flankenwinkel ($\alpha$) aufweist, der größer als 60° und der kleiner als 88° ist, und wobei der die Leitfläche des Strömungskonditionieres (300) bildende zweite Innenkonus einen Flankenwinkel ($\beta$) aufweist, der größer als 2°, insb. größer als 4°, und der kleiner als 45°, insb. kleiner als 10°, ist.

7. Prozeßleitung nach einem der Ansprüche 1 bis 2, wobei im Strömungskonditionierer (300) eine stromaufwärts von dessen Prallfläche (P) angeordnete, dem Führen von im Strömungskonditionierer (300) strömendem Medium dienende Leitfläche (L) vorgesehen ist, die sich in Richtung des Auslaßende des Strömungskonditionierers (300) erstreckt.

**8.** Prozeßleitung nach dem vorherigen Anspruch,

- wobei die, insb. konisch ausgebildete, Leitfläche des Strömungskonditionierers (300) zumindest abschnittsweise konvex geformt ist; und/oder
- wobei die, insb. konisch ausgebildete, Leitfläche des Strömungskonditionierers (300) zumindest abschnittsweise konkav geformt ist; und/oder
- wobei die Leitfläche des Strömungskonditionierers (300) eine im wesentlichen S-förmige Konturlinie aufweist; und/oder
- wobei die Leitfläche des Strömungskonditionieres (300) sich zum Meßrohr (2) hin verjüngend ausgebildet ist; und/oder
- wobei die Leitfläche (L) des Strömungskonditionierers (300) im wesentlichen konisch geformt ist.

**9.** Prozeßleitung nach einem der vorherigen Ansprüche, wobei es sich bei dem Meßaufnehmer um einen Wirbel-Durchflußaufnehmer, insb. einen Wirbelstraßen-Durchflußaufnehmer, handelt.

**10.** Prozeßleitung nach einem der vorherigen Ansprüche, wobei das wenigstens eine Sensorelement zumindest anteilig in das Meßrohr (2) hineinragt.

**11.** Prozeßleitung nach einem der vorherigen Ansprüche,

- wobei ein von der wenigstens einen in das Lumen des Strömungskonditionierers (300) hineinragenden Innenkante (K) begrenzter Querschnitt (a) des Lumens des Strömungskonditionierers (300) kleiner ist als ein Strömungsquerschnitt (A2) des Zulaufsegments (400) der Prozeßleitung;
- wobei ein Querschnittsverhältnis (A2/A1) des Strömungsquerschnitts (A2) des Zulaufsegments (400) der Prozeßleitung zum Strömungsquerschnitt (A1) des Meßrohrs (2) größer als 1.5 und kleiner als 10, insb. in einem Bereich zwischen 1.66 und 9.6, gehalten ist;
- wobei ein Einschnürungsverhältnis (a/A2) des durch die Innenkante begrenzten Querschnitts (a) zum Strömungsquerschnitt (A2) des Zulaufsegments (400) der Prozeßleitung kleiner als 0.9 und größer als 0.1, insb. in einem Bereich zwischen 0.25 und 0.85, gehalten ist; und
- wobei ein Kontraktionsverhältnis (a/A1) des durch die Innenkante (K) begrenzten Querschnitts (a) zum Strömungsquerschnitt (A1) des Meßrohrs (2) größer als 1.2 und kleiner als 5, insb. in einem Bereich zwischen 1.3 und 3, gehalten ist.

**12.** Prozeßleitung nach dem vorherigen Anspruch,

- wobei eine Differenz (A2/A1-a/A2) zwischen dem Querschnittsverhältnis (A2/A1) und dem Einschnürungsverhältnis (a/A2) größer als 0.5 und kleiner als 10, insb. größer als 0.83 und kleiner als 9.5, gehalten ist; und/oder
- und wobei eine Differenz (A2/A1-a/A1) zwischen dem Querschnittsverhältnis (A2/A1) und dem Kontraktionsverhältnis (a/A1) größer als 0.2 und kleiner als 10, insb. größer als 0.25 und kleiner als 8, gehalten ist.

**13.** Verwendung der Prozeßleitung nach einem der vorherigen Ansprüche zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in der Prozeßleitung strömenden Mediums.

**Claims**

**1.** Process pipe, particularly a conduit, with a measuring system introduced in the course of said process pipe, wherein said measuring system is designed to measure at least one measured variable, particularly a mass flow, a volume flow, a flow velocity, a density, a viscosity, a pressure, a temperature and/or similar, of a medium flowing through the process pipe, and with an inlet segment (400) connected to the measuring system on the inlet side,

- wherein said measuring system comprises:

-- a sensor (100)

--- with a measuring tube, particularly an essentially straight measuring tube, serving to conduct the medium to be measured, said measuring tube having a smaller flow cross-section (A1) than the inlet segment (400) of the process pipe connected to the measuring system on the inlet side,

-- with at least one buff body (4) arranged in the measuring tube (2), and
-- with a sensor arrangement,

--- which has at least one sensor element which reacts primarily to the measured variable to be measured, particularly also to changes of same, said sensor element being arranged downstream from the at least one bluff body (4),
--- which, by means of the at least one sensor element, delivers at least one measuring signal that is influenced by the measured variable,

- measuring electronics that communicate with the sensor, wherein, using the at least one measuring signal, said electronics at least intermittently generate at least one measured value that currently represents the measured variable, particularly a mass flow measured value, a volume flow measured value, a density measured value, a viscosity measured value, a pressure measured value, a temperature measured value, and
- a flow conditioner (300) which is arranged on the inlet side of the measuring tube, between the measuring tube and the inlet segment (400) of the process pipe, said conditioner having an interior channel through which medium flows during operation and which narrows in the direction of the measuring tube (2),
- wherein an inlet end of the flow conditioner (300), which faces towards the inlet segment of the process pipe, has a flow cross-section (a), which is greater than the flow cross-section (A1) of the measuring tube (2), and an outlet end of the flow conditioner (300), which faces towards the measuring tube (2), has a flow cross-section (b) which is smaller than the flow cross-section of the inlet end of the flow conditioner (300);
- wherein at least one impact surface (P), particularly circular, is provided in the flow conditioner (300), said impact surface being arranged upstream from the outlet end of the flow conditioner (300) and projecting into the interior channel of said flow conditioner, wherein medium that is to be measured flows to said impact surface during operation;
- and wherein the flow conditioner (300) has at least one, notably circular, interior edge (K), which is arranged upstream from the outlet end of said flow conditioner and projects into the interior channel of said flow conditioner (300), said interior edge limiting the cross-section (a) of the interior channel of the flow conditioner (300) and wherein medium in the flow conditioner flows to said interior edge during operating, and wherein said interior edge has an edge radius which is less than 2 mm, notably less than 0.6 mm;
- wherein the impact surface (P) and the interior edge (K) are formed at least in part by an interior cone which is shaped into the flow conditioner (300) on the inlet side, and particularly extends to the inlet end, wherein said interior cone narrows towards the measuring tube (2);
- and wherein the interior cone has a flank angle ($\alpha$) which is greater than 45°, particularly greater than 60° and less than 90°, particularly less than 88°.

2. Process pipe as claimed in the previous claim,

- wherein the measuring tube (2) is essentially circular cylindrical in shape at least in an inlet area;
- wherein the flow conditioner (300) is essentially circular cylindrical in shape at least in an outlet area; and
- wherein the measuring tube (2), which is particularly circular cylindrical, is essentially straight.

3. Process pipe as claimed in one of the previous claims,

- wherein the at least one interior edge projecting into the interior channel of the flow conditioner (300) is designed and arranged in the flow conditioner (300) in such a way that it is aligned essentially perpendicular to an imaginary longitudinal axis of the flow conditioner (300) and/or perpendicular to an imaginary longitudinal axis of the measuring tube (2); and/or
- wherein the at least one interior edge (K) projecting into the interior channel of the flow conditioner (300) limits a guide surface (L) of the flow conditioner (300), which extends in the direction of the outlet end of the flow conditioner (300) and serves to conduct medium flowing through the flow conditioner (300).

4. Process pipe as claimed in one of the Claims 1 to 2,

- wherein the at least one interior edge projecting into the interior channel of the flow conditioner (300) limits a guide surface (L) of the flow conditioner (300), which extends in the direction of the outlet end of the flow conditioner (300) and serves to conduct medium flowing through the flow conditioner (300), and
- wherein the guide surface (L) and the interior edge (K) are formed at least in part by an interior cone, which is shaped into the flow conditioner (300) on the inlet side, and particularly extends to the outlet end, wherein said interior cone has a flank angle ($\beta$) which is greater than 2°, particularly greater than 4°, and/or is less than 45°, particularly less than 10°.

5. Process pipe as claimed in the previous claim, wherein the impact surface (P) is formed by a first interior cone which is shaped into the flow conditioner on the inlet side and extends in the direction of the inlet end of the flow conditioner, and the guide surface is formed by a second interior cone which is shaped into the flow conditioner (300) on the inlet side and extends in the direction of the outlet end of the flow conditioner in such a way that the first interior cone forming the impact surface (P) has a flank angle which is greater than a flank angle of the second interior cone forming the guide surface (L).

6. Process pipe as claimed in the previous claim, wherein the first interior cone forming the impact surface (P) of the flow conditioner (300) has a flank angle ($\alpha$) which is greater than 60° and less than 88°, and wherein the second interior cone forming the guide surface of the flow conditioner (300) has a flank angle ($\beta$) which is greater than 2°, particularly greater than 4°, and less than 45°, particularly less than 10°.

7. Process pipe as claimed in one of the Claims 1 to 2, wherein a guide surface (L) is provided in the flow conditioner (300) upstream from the impact surface (P) of the flow conditioner, said guide surface (L) serving to conduct medium flowing through the flow conditioner (300) and extending in the direction of the outlet end of the flow conditioner (300).

8. Process pipe as claimed in the previous claim,

   - wherein the guide surface of the flow conditioner (300), which is particularly conical in shape, is convex at least in part; and/or
   - wherein the guide surface of the flow conditioner (300), which is particularly conical in shape, is concave at least in part; and/or
   - wherein the guide surface of the flow conditioner (300) has an essentially S-shaped contour line; and/or
   - wherein the guide surface of the flow conditioner (300) is formed in such a way that it narrows towards the measuring tube (2); and/or
   - wherein the guide surface (L) of the flow conditioner (300) is essentially conical in shape.

9. Process pipe as claimed in one of the previous claims, wherein the sensor is a vortex flow sensor, particularly a Karman vortex street flow sensor.

10. Process pipe as claimed in one of the previous claims, wherein the at least one sensor element projects into the measuring tube (2) at least in part.

11. Process pipe as claimed in one of the previous claims,

   - wherein a cross-section (a) of the interior channel of the flow conditioner (300), which is limited by the at least one interior edge (K) projecting into the interior channel of the flow conditioner (300), is smaller than a flow cross-section (A2) of the inlet segment (400) of the process pipe;
   - and wherein a cross-section ratio (A2/A1) of the flow cross-section (A2) of the inlet segment (400) of the process pipe to the flow cross-section (A1) of the measuring tube (2) is greater than 1.5 and/or less than 10, and is particularly maintained in a range between 1.66 and 9.6;
   - wherein a restriction ratio (a/A2) of the cross-section (a), which is limited by the interior edge, to the flow cross-section (A2) of the inlet segment (400) of the process pipe is less than 0.9 and/or greater than 0.1, and is particularly maintained in a range between 0.25 and 0.85; and
   - wherein a contraction ratio (a/A1) of the cross-section (a), which is limited by the interior edge, to the flow cross-section (A1) of the measuring tube (2) is greater than 1.2 and/or less than 5, and is particularly maintained in a range between 1.3 and 3.

12. Process pipe as claimed in the previous claim,

- wherein a difference (A2/A1-a/A2) between the cross-section ratio (A2/A1) and the restriction ratio (a/A2) is greater than 0.5 and less than 10, and is particularly maintained in a range greater than 0.83 and less than 9.5; and/or

- wherein a difference (A2/A1-a/A1) between the cross-section ratio (A2/A1) and the contraction ratio (a/A1) is greater than 0.2 and/or less than 10, and is particularly maintained in a range greater than 0.25 and less than 8.

13. Use of the process pipe as claimed in one of the previous claims to measure at least one measured variable, particularly a mass flow, a volume flow, a flow velocity, a density, a viscosity, a pressure, a temperature and/or similar, of a medium flowing through the process pipe.


**Revendications**

1. Conduite de process, notamment une tuyauterie, avec un système de mesure inséré dans son tracé, lequel système est destiné à mesurer au moins une grandeur de mesure, notamment un débit massique, un débit volumique, une vitesse d'écoulement, une masse volumique, une viscosité, une pression, une température, etc., d'un produit s'écoulant dans une conduite de process, et avec un segment d'alimentation (400) raccordé côté entrée au système de mesure,

- le système de mesure comprenant :
- un capteur (100)

-- avec un tube de mesure, notamment pour l'essentiel droit, servant au guidage du produit à mesurer, lequel tube de mesure présente une section d'écoulement (A1) inférieure au segment d'alimentation (400) de la conduite de process, raccordée côté entrée au système de mesure, et

-- avec au moins un corps de retenue (4) disposé dans l'au moins un tube de mesure et

-- avec un dispositif capteur,

--- qui comprend au minimum un élément capteur réagissant de façon primaire à une grandeur à mesurer, notamment aux changements de celle-ci, lequel élément capteur est disposé en aval de l'au moins un corps de retenue (4), et

--- qui délivre, au moyen de l'au moins un élément capteur, un signal de mesure influencé par la grandeur à mesurer,

- une électronique de mesure communiquant avec le capteur, laquelle électronique génère, en utilisant l'au moins un signal de mesure, au minimum temporairement au moins une valeur mesurée représentant momentanément la grandeur à mesurer, notamment une valeur mesurée de débit massique, une valeur mesurée de débit volumique, une valeur mesurée de masse volumique, une valeur mesurée de viscosité, une valeur mesurée de pression, une valeur mesurée de température, etc., ainsi que

- un conditionneur d'écoulement (300) disposé côté entrée du tube de mesure, entre celui-ci et le segment d'alimentation (400) de la conduite de process, lequel conditionneur comporte un canal intérieur parcouru, en fonctionnement, par le produit et qui se rétrécit en direction du tube de mesure (2),

- une extrémité d'entrée du conditionneur d'écoulement (300), qui fait face au segment d'alimentation (400) de la conduite de process, présentant une section d'écoulement (a) supérieure à la section d'écoulement (A1) du tube de mesure (2), et une extrémité de sortie du conditionneur d'écoulement (300), qui fait face au tube de mesure (2), présentant une section d'écoulement (b) inférieure à la section d'écoulement de l'extrémité d'entrée du conditionneur d'écoulement (300);

- au moins une surface d'impact (P), notamment circulaire, étant prévue dans le conditionneur d'écoulement (300), laquelle est disposée en amont de l'extrémité de sortie du conditionneur d'écoulement (300) et pénètre dans le canal intérieur de celui-ci, laquelle surface d'impact est balayée, en fonctionnement, par le produit à mesurer ;

- et le conditionneur d'écoulement (300) présentant au minimum un bord intérieur (K), disposé en amont de l'extrémité de sortie du conditionneur et pénétrant dans le canal intérieur du conditionneur d'écoulement (300), lequel bord limite la section (a) du canal intérieur du conditionneur d'écoulement (300) et lequel bord est balayé, en fonctionnement, par le produit qui y est guidé, et présente un rayon de bord inférieur à 2 mm, notamment inférieur à 0,6 mm ;

EP 2 044 391 B1

- la surface d'impact (P) et le bord intérieur (K) étant constitués au moins partiellement par un cône intérieur formé côté entrée dans le conditionneur d'écoulement (300), notamment s'étendant jusqu'à son extrémité d'entrée, et qui se rétrécit en direction du tube de mesure (2) ;
- et le cône intérieur présentant un angle de flanc (σ) supérieur à 45°, notamment supérieur à 60° et inférieur à 90°, notamment inférieur à 88°.

2. Conduite de process selon la revendication précédente,

- pour laquelle le tube de mesure (2) est formé au minimum dans une zone d'entrée pour l'essentiel de façon cylindrique circulaire ;
- pour laquelle le conditionneur d'écoulement (300) est formé au minimum dans une zone de sortie pour l'essentiel de façon cylindrique circulaire ; et
- pour laquelle le tube de mesure (2), notamment cylindrique circulaire, est pour l'essentiel droit.

3. Conduite de process selon l'une des revendications précédentes,

- pour laquelle l'au moins un bord intérieur (K) pénétrant dans le canal intérieur du conditionneur d'écoulement (300) est conçu et disposé dans le conditionneur d'écoulement (300) de telle sorte à être pour l'essentiel aligné perpendiculairement à un axe longitudinal imaginaire du conditionneur d'écoulement (300) et/ou perpendiculairement à un axe longitudinal imaginaire du tube de mesure (2) ; et/ou
- pour laquelle l'au moins un bord intérieur (K) pénétrant dans le canal intérieur (K) du conditionneur d'écoulement (300) limite une surface de guidage (L) du conditionneur d'écoulement (300) servant à guider le produit s'écoulant dans le conditionneur d'écoulement (300) et qui s'étend en direction de l'extrémité de sortie du conditionneur d'écoulement (300).

4. Conduite de process selon l'une des revendications 1 à 2,

- pour laquelle l'au moins un bord intérieur pénétrant dans le canal intérieur du conditionneur d'écoulement (300) limite une surface de guidage (L) du conditionneur d'écoulement (300) servant à guider le produit s'écoulant dans le conditionneur d'écoulement (300) et qui s'étend en direction de l'extrémité de sortie du conditionneur d'écoulement (300), et
- pour laquelle la surface de guidage (L) et le bord intérieur (K) sont constitués au moins partiellement par un cône intérieur formé côté entrée dans le conditionneur d'écoulement (300), notamment s'étendant jusqu'à son extrémité de sortie, lequel cône présente un angle de flanc (β) supérieur à 2°; notamment à 4°, et/ou inférieur à 45°, notamment inférieur à 10°.

5. Conduite de process selon la revendication précédente, pour laquelle la surface d'impact (P) est constituée par un premier cône intérieur formé côté entrée dans le conditionneur d'écoulement (300) et s'étendant en direction de son extrémité d'entrée, et pour laquelle la surface de guidage est constituée par un deuxième cône intérieur formé côté entrée dans le conditionneur d'écoulement (300) et s'étendant en direction de son extrémité de sortie, de telle sorte que le premier cône intérieur formant la surface d'impact (P) présente un angle de flanc supérieur à un angle de flanc du deuxième cône intérieur formant la surface de guidage (L).

6. Conduite de process selon la revendication précédente, pour laquelle le premier cône intérieur formant la surface d'impact (P) du conditionneur d'écoulement (300) présente un angle de flanc (σ) supérieur à 60° et inférieur à 88°, et pour laquelle le deuxième cône intérieur formant la surface de guidage du conditionneur d'écoulement (300) présente un angle de flanc (β) supérieur à 2°, notamment supérieur à 4°, et inférieur à 45°, notamment inférieur à 10°.

7. Conduite de process selon l'une des revendications 1 à 2, pour laquelle est prévue, dans le conditionneur d'écoulement (300), une surface de guidage (L) disposée en amont de la surface d'impact (P) du conditionneur et servant à guider le produit s'écoulant dans le conditionneur d'écoulement (300), laquelle surface de guidage s'étend en direction de l'extrémité de sortie du conditionneur d'écoulement (300).

8. Conduite de process selon la revendication précédente,

- pour laquelle la surface de guidage du conditionneur d'écoulement (300), notamment conique, est formée au moins partiellement de façon convexe ; et/ou
- pour laquelle la surface de guidage du conditionneur d'écoulement (300), notamment conique, est formée au

15

moins partiellement de façon concave ; et/ou
- pour laquelle la surface de guidage du conditionneur d'écoulement (300) présente pour l'essentiel une ligne de contour en forme de S ; et/ou
- pour laquelle la surface de guidage du conditionneur d'écoulement (300) est formée de telle sorte à se rétrécir en direction du tube de mesure (2) ; et/ou
- pour laquelle la surface de guidage (L) est formée pour l'essentiel de façon conique.

9. Conduite de process selon l'une des revendications précédentes, pour laquelle il s'agit, concernant le capteur de mesure, d'un capteur de débit vortex, notamment d'un capteur de débit vortex de Karman.

10. Conduite de process selon l'une des revendications précédentes, pour laquelle l'au moins un élément capteur pénètre au moins partiellement dans le tube de mesure (2).

11. Conduite de process selon l'une des revendications précédentes,

- pour laquelle une section (a) du canal intérieur du conditionneur d'écoulement (300), limitée par l'au moins un bord intérieur (K) s'étendant dans le canal intérieur du conditionneur d'écoulement (300), est inférieure à la section d'écoulement (A2) du segment d'alimentation (400) de la conduite de process ;
- pour laquelle un rapport des sections (A2/A1) entre la section d'écoulement (A2) du segment d'alimentation (400) de la conduite de process et la section d'écoulement (A1) du tube de mesure est supérieur à 1,5 et/ou inférieur à 10, notamment maintenu dans une plage comprise entre 1,66 et 9,6 ;
- pour laquelle un rapport de striction (a/A2) entre la section (a) limitée par le bord intérieur et la section d'écoulement (A2) du segment d'alimentation (400) de la conduite de process est inférieur à 0,9 et/ou supérieur à 0,1, notamment maintenu dans une plage comprise entre 0,25 et 0,85 ; et

12. Conduite de process selon la revendication précédente,

- pour laquelle une différence (A2/A1-a/A2) entre le rapport des sections (A2/A1) et le rapport de striction (a/A2) est supérieure à 0,5 et/ou inférieure à 10, notamment maintenue supérieure à 0,83 et inférieure à 9,5 ; et/ou
- et pour laquelle une différence (A2/A1-a/A1) entre le rapport des sections (A2/A1) et le rapport de contraction (a/A1) est supérieure à 0,2 et/ou inférieure à 10, notamment maintenue dans une plage comprise entre 0,25 et 8.

13. Utilisation de la conduite de process selon l'une des revendications précédentes destinée à la mesure d'au moins une grandeur à mesurer, notamment un débit massique, un débit volumique, une vitesse d'écoulement, une masse volumique, une viscosité, une pression, une température, etc., d'un produit s'écoulant dans la conduite de process.

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1039269 A
- US 6031740 A
- US 5540103 A
- US 5351554 A
- US 4563904 A
- US 6397683 B
- US 6330831 B
- US 6293156 B
- US 6189389 B
- US 5531124 A
- US 5463905 A
- US 5131279 A
- US 4787252 A
- EP 984248 A
- GB 2142725 A
- US 4308754 A
- US 4420983 A
- US 4468971 A
- US 4524610 A
- US 4716770 A
- US 4768384 A
- US 5052229 A
- US 5052230 A
- US 5231884 A
- US 5359881 A
- US 5458005 A
- US 5469748 A
- US 5687100 A
- US 5796011 A
- US 5808209 A
- US 6003384 A
- US 6053054 A
- US 6006609 A
- US 6352000 B
- US 6513393 B
- US 6644132 B
- US 6651513 B
- US 6880410 B
- US 6910387 B
- US 20050092101 A
- WO 8802476 A
- WO 8802853 A
- WO 9516897 A
- WO 0036379 A
- WO 0014485 A
- WO 0102816 A
- WO 02086426 A
- US 6397683 A
- EP 903651 A
- EP 1008836 A
- US 6352000 A